# EUROPÄISCHE PATENTSCHRIFT

(11) **EP 4 304 903 B1**
(45) Veröffentlichungstag und Bekanntmachung des Hinweises auf die Patenterteilung: **15.10.2025**
(21) Anmeldenummer: 22708489.4
(22) Anmeldetag: 10.02.2022
(51) Int. Cl.: B60T 7/04, G01D 5/20, G01D 5/22

(54) **BREMSEINRICHTUNG EINES FAHRZEUGS MIT EINER BETRIEBSBREMSPEDALEINRICHTUNG MIT EINER INDUKTIVEN POSITIONSERKENNUNGSVORRICHTUNG**
BRAKING DEVICE OF A VEHICLE WITH A SERVICE BRAKE PEDAL DEVICE WITH AN INDUCTIVE POSITION DETECTION DEVICE
DISPOSITIF DE FREINAGE D'UN VÉHICULE AVEC UN DISPOSITIF DE PÉDALE DE FREIN DE SERVICE AVEC UN DISPOSITIF DE DÉTECTION DE POSITION INDUCTIF

(30) Priorität: 09.03.2021 DE 102021105622
(43) Veröffentlichungstag der Anmeldung: 17.01.2024
(73) Patentinhaber: KNORR-BREMSE Systeme für Nutzfahrzeuge GmbH, 80809 München (DE)
(72) Erfinder: ROTH, Matthias, 71665 Vaihingen an der Enz (DE)
(86) Internationale Anmeldenummer: PCT/EP2022/053286
(87) Internationale Veröffentlichungsnummer: WO 2022/189090

(56) Entgegenhaltungen:
- DE-A1- 102007 052 162
- DE-A1- 102013 204 957
- DE-A1- 102014 210 618
- DE-A1- 19 913 869
- DE-A1- 4 141 545
- DE-B- 1 108 449
- DE-U1- 29 923 127
- US-A1- 2009 001 968

## Beschreibung

Die Erfindung geht aus von einer Bremseinrichtung eines Fahrzeugs mit einer mit einer Betriebsbremspedaleinrichtung und mit einer induktiven Positionserkennungsvorrichtung, sowie von einem Fahrzeug gemäß Anspruch 12, welches eine Bremseinrichtung umfasst.

Eine Positionserkennungsvorrichtung ist beispielsweise aus EP 2 265 903 B1 bekannt und wird dort zur Erkennung der Position eines Positionsgebers, der mit einer Schalt- oder Betätigungsstange einer Bremseinrichtung oder eines Getriebes eines Fahrzeugs gekoppelt ist, verwendet. Die Spule der bekannten Positionserkennungsvorrichtung wird durch eine Planarspule gebildet, welche den Positionsgeber halbkreisförmig umgreift.

Aus EP 3 194 221 B4 ist eine gattungsgemäße Bremseinrichtung mit einer Betriebsbremspedaleinrichtung und einer induktiven Positionserkennungsvorrichtung bekannt, welche auf einen Spulenkörper gewickelte elektrische Magnetspulen umfasst. Bei einer solchen Betriebsbremspedaleinrichtung wird innerhalb eines elektrischen Kanals der axiale Betätigungsweg oder der axiale Hub des Stößelkolbens mittels einer induktiven Positionserkennungsvorrichtung gemessen, wobei dieser axiale Hub dann das Bremsanforderungssignal repräsentiert. Dann umschließen die Magnetspulen den Stößelkolben. Insbesondere sind zwei axial hintereinander angeordnete Magnetspulen vorhanden. Weiterhin stützt eine Schraubenfederanordnung den Stö-ßelkolben an einem ein Doppelsitzventil betätigenden Ventilkolben axial ab. Solche Betriebsbremspedaleinrichtungen werden beispielsweise in rein elektrischen oder elektro-pneumatischen Betriebsbremseinrichtungen von Nutzfahrzeugen eingesetzt.

Bei rein elektrischen Betriebsbremseinrichtungen ist wenigstens ein elektrischer Bremskreis vorhanden, mit wenigstens einem in der Betriebsbremspedaleinrichtung integrierten elektrischen Bremswertgeber, welcher abhängig von einer Betätigung des Betriebsbremspedals ein elektrisches Betriebsbremsanforderungssignal erzeugt, welches in ein elektronisches Bremssteuergerät eingesteuert wird, das abhängig von dem Betriebsbremsanforderungssignal Stellbefehle für elektrische Bremsaktuatoren erzeugt.

Bei elektro-pneumatischen Betriebsbremseinrichtungen ist ein vorrangiger elektropneumatischer Betriebsbremskreis vorhanden, welchem ein elektrischer Kanal der Betriebsbremspedaleinrichtung bzw. Fußbremsmoduls (FBM) zugeordnet ist, d.h. mit Betätigung des Betriebsbremspedals erzeugt ein in der Betriebsbremspedaleinrichtung angeordneter elektrischer Bremswertgeber (Sensoreinrichtung plus Auswerteelektronik) ein elektrisches Betriebsbremsanforderungssignal, welches in ein elektronisches Bremssteuergerät eingesteuert wird, um durch eine entsprechende Ansteuerung von Magnetventilen bzw. Druckregelmodulen einen dem Betriebsbremsanforderungssignal entsprechenden pneumatischen Bremsdruck in pneumatische Betriebsbremszylinder einzusteuern. Parallel hierzu bewirkt die Betätigung des Betriebsbremspedals, dass ein mit diesem durch eine Stößel/Stößelaufnahme verbundener Stößelkolben über eine Druckfeder einen Relais- oder Ventilkolben betätigt, welcher wiederum ein Doppelsitzventil der Betriebsbremspedaleinrichtung steuert, um einen der Bremsanforderung entsprechenden pneumatischen Steuerdruck in wenigstens einem pneumatischen Kanal der Betriebsbremspedaleinrichtung zu erzeugen, der dann in nachrangigen, rein pneumatischen Betriebsbremskreisen einen Bremsdruck in den Bremszylindern bilden, wenn der vorrangige elektro-pneumatische Betriebsbremskreis aufgrund eines Defekts ausgefallen ist.

Um die Betätigungskraft vom Kolben auf den das Doppelsitzventil betätigenden Ventilkolben zu übertragen und gleichzeitig dem Fahrer ein der Betätigung des Betriebsbremspedals entsprechendes Druckgefühl an seinem Fuß zu vermitteln, ist dann die Schraubenfederanordnung vorgesehen, welche den Stößelkolben an dem das Doppelsitzventil betätigenden Ventilkolben axial abstützt.

Weitere Positionserkennungsvorrichtungen werden in DE 10 2013 204957 A1, DE 10 2007 052162 A1, DE 199 13 869 A1, DE 199 13 869 A1, DE 11 08 449 B, DE 41 41 545 A1, US 2009/001968 A1, DE 299 23 127 U1 und in DE 10 2014 210 618 A1 beschrieben. Das Messprinzip beruht dort jeweils auf einer Längenänderung eines als Messspule verwendeten Feder, welche deren Induktivität verändert.

Der vorliegenden Erfindung liegt die Aufgabe zugrunde, bei der Bremseinrichtung die Betriebsbremspedaleinrichtung so zu gestalten, dass sie einfacher aufgebaut ist und zudem Bauraum spart. Auch soll Fahrzeug zur Verfügung gestellt werden, welches eine solche Bremseinrichtung umfasst.

Diese Aufgabe wird erfindungsgemäß durch die Merkmale der Ansprüche 1 und 12 gelöst.

### Offenbarung der Erfindung

Die Erfindung geht aus von einer Bremseinrichtung für ein Fahrzeug, wobei die Bremseinrichtung eine induktive Positionserkennungsvorrichtung aufweist, wobei die Bremseinrichtung als elektro-pneumatische oder elektrische Bremseinrichtung ausgebildet ist und eine Betriebsbremspedaleinrichtung aufweist, welche wenigstens Folgendes umfasst:
a) ein Betriebsbremspedal,
b) einen mit dem Betriebsbremspedal verbundenen Stößel,
c) ein Betriebsbremspedaleinrichtungs-Gehäuse,
d) ein in dem Betriebsbremspedaleinrichtungs-Gehäuse axial beweglich gelagerten Stößelkolben mit einer Stößelaufnahme, in welche der Stößel eingreift,
e) eine Betriebsbremspedaleinrichtungs-Schraubenfederanordnung, welche den Stößelkolben an einem ein Sitzventil betätigenden Ventilkolben oder an einem Gehäuseabschnitt des Betriebsbremspedaleinrichtungs-Gehäuses axial abstützt, wobei
f) die induktive Positionserkennungsvorrichtung zur berührungslosen Erkennung einer Position eines Positionsgebers ausgebildet ist und wenigstens Folgendes umfasst:
   f1) Ein Positionserkennungsvorrichtungs-Gehäuse,
   f2) eine Spule, welche ein Magnetfeld in einem Magnetfeldbereich erzeugt,
   f3) eine mit der Spule funktional gekoppelte Mess- und Auswerteeinrichtung,
   f4) den Positionsgeber,
   f5) eine relativ zum Positionserkennungsvorrichtungs-Gehäuse bewegbare Stelleinrichtung, durch welche eine Position des Positionsgebers veränderbar ist, wobei der Positionsgeber derart in dem Magnetfeldbereich angeordnet und ausgebildet ist, dass eine Änderung der Position des Positionsgebers in Bezug auf das Magnetfeld eine Induktivitätsänderung der Spule verursacht,
   f6) eine Positionserkennungsvorrichtungs-Schraubenfederanordnung mit wenigstens einer Schraubenfeder, welche Federkräfte auf den Positionsgeber ausübt, wobei
   f7) die Mess- und Auswerteeinrichtung eine Funktion aufweist, mit der die Induktivitätsänderung der Spule erfasst und daraus die Position des Positionsgebers ermittelt wird, wobei
g) der Stößel eine Betätigungsstange bildet und von der Stelleinrichtung der Positionserkennungsvorrichtung umfasst ist oder die Stelleinrichtung der Positionserkennungsvorrichtung bildet, und wobei
h) der Stößelkolben von dem Positionsgeber der Positionserkennungsvorrichtung umfasst ist oder den Positionsgeber der Positionserkennungsvorrichtung bildet, und wobei
i) die Betriebsbremspedaleinrichtungs-Schraubenfederanordnung von der Positionserkennungsvorrichtungs-Schraubenfederanordnung umfasst oder die Positionserkennungsvorrichtungs-Schraubenfederanordnung bildet, und wobei
j) das Betriebsbremspedaleinrichtungs-Gehäuse von dem Positionserkennungsvorrichtung-Gehäuse umfasst ist oder das Positionserkennungsvorrichtung-Gehäuse bildet.

Erfindungsgemäß ist dann vorgesehen, dass
k) die wenigstens eine Schraubenfeder ausgebildet und angeordnet ist, dass sie wenigstens teilweise die Spule ausbildet, und dass
I) die wenigstens eine Schraubenfeder mit der Mess- und Auswerteeinrichtung elektrisch leitend verbunden ist.

Die Positionserkennungsvorrichtung verwendet also zumindest eine Spule, die ein Magnetfeld erzeugt und mindestens einen im Bereich des Magnetfelds angeordneten Positionsgeber. Die Spule und der Positionsgeber sind relativ zueinander bewegbar und der Positionsgeber erzeugt dabei Wirbelstromverluste, die eine Induktivitätsänderung der Spule verursachen. Die Mess- und Auswerteeinrichtung erfasst die Induktivitätsänderung der Spule und ermittelt daraus die Position des Positionsgebers.

Die Positionserkennungsvorrichtungs-Schraubenfederanordnung kann zur Ausübung von Federkräften auf den Positionsgeber zu unterschiedlichen Zwecken vorgesehen sein, beispielsweise, damit der Positionsgeber entlang eines Betätigungswegs, welcher unterschiedliche Positionen des Positionsgebers umfasst, stets durch die Federkräfte vorgespannt und dadurch definiert geführt ist. Die wenigstens eine Schraubenfeder ist bevorzugt ausgebildet, dass sie Zugkräfte oder Druckkräfte auf den Positionsgeber ausübt.

Mit anderen Worten übt dann die wenigstens eine Schraubenfeder die Funktion der Spule aus, indem sie das Magnetfeld in dem Magnetfeldbereich erzeugt und mit der Mess- und Auswerteeinrichtung funktional gekoppelt ist. Dies ist möglich, weil die wenigstens eine Schraubenfeder ähnlich den Spulenwindungen einer Magnetspule Schraubenwindungen aufweist, durch welche infolge elektrischer Erregung (Bestromung) mittels der Mess- und Auswerteeinrichtung ein Magnetfeld erzeugbar ist. Daher ist die wenigstens eine Schraubenfeder aus einem elektrisch leitfähigen Material gebildet, das bei Durchfluss von elektrischem Strom in der Lage ist, ein Magnetfeld auszubilden. Folglich bilden die Schraubenwindungen der wenigstens einen Schraubenfeder Spulenwindungen wenigstens einer Spule aus.

Damit weist die wenigstens eine Schraubenfeder eine vorteilhafte Doppelfunktion auf, indem sie einerseits aus den oben genannten Gründen Federkräfte auf den Positionsgeber ausübt und andererseits die Funktion der Spule ausübt, welche dann als separates oder zusätzliches Bauteil der Positionserkennungsvorrichtung entfallen kann. Daher werden durch die Erfindung die Anzahl der Bauelemente, der Bauraum und das Gewicht der Positionserkennungsvorrichtung reduziert.

Durch die in den Unteransprüchen aufgeführten Maßnahmen sind vorteilhafte Weiterbildungen und Verbesserungen der in Anspruch 1 angegebenen Erfindung möglich.

Besonders bevorzugt ist der Positionsgeber aus einem elektrisch leitfähigen Material gebildet. Auch kann der Positionsgeber aus einem nicht-magnetischen Material gebildet sein, insbesondere aus Aluminium und/oder Kupfer.

Die Funktion der Mess- und Auswerteeinrichtung ist vorzugsweise derart gestaltet, dass diese einen vom Positionsgeber zurückgelegten Weg ermitteln kann.

Auch kann die Stelleinrichtung eine Betätigungsstange umfassen. Dabei kann der Positionsgeber kraft-, stoff- und/oder formschlüssig an der Betätigungsstange fixiert sein und/oder die Betätigungsstange derart kontaktieren, dass die Position des Positionsgebers veränderbar ist.

Auch kann die Betriebsbremspedaleinrichtungs-Schraubenfederanordnung in axialer Richtung gesehen wenigstens einen axialen Abschnitt des Stößelkolbens umschlingen.

Auch kann sich die Betriebsbremspedaleinrichtungs-Schraubenfederanordnung einerseits an dem Stößelkolben und andererseits an wenigstens einem Federteller abstützen, welcher in Bezug auf den Ventilkolben, den Stößelkolben oder den Gehäuseabschnitt axialkraftübertragend angeordnet ist. Zumindest der Federteller, der Stößelkolben, der Ventilkolben und die Betriebsbremspedaleinrichtungs-Schraubenfederanordnung können koaxial angeordnet sein.

Insbesondere kann die Betriebsbremspedaleinrichtungs-Schraubenfederanordnung mehrere parallel angeordnete Schraubenfedern aufweisen.

Auch kann eine erste Schraubenfeder der Betriebsbremspedaleinrichtungs-Schraubenfederanordnung zwischen dem Stößelkolben und dem Federteller stets vorgespannt sein, aber eine zweite Schraubenfeder Betriebsbremspedaleinrichtungs-Schraubenfederanordnung mit ihrem einen Ende an dem Federteller abgestützt sein und mit ihrem anderen Ende erst nach Zurücklegen eines bestimmten Anlegehubs des Stößelkolbens an dem Stößelkolben zur Anlage kommen. Dadurch kann eine Betätigungskraft/Betätigungsweg-Kennlinie erzeugt werden, bei welcher die Betätigungskraft ab einem bestimmten Betätigungsweg, -hub oder -winkel des Betriebsbremspedals sprunghaft ansteigt.

Nicht zuletzt umfasst die Erfindung ein Fahrzeug mit einer oben beschriebenen Bremseinrichtung.

### Zeichnung

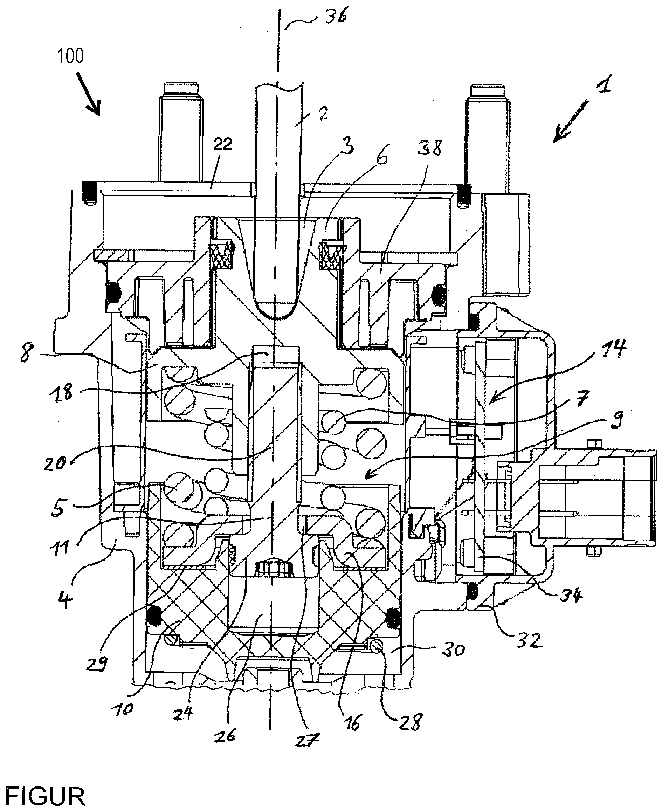

Die Erfindung wird nachstehend anhand eines Ausführungsbeispiels unter Bezugnahme auf die beigefügte Zeichnung näher beschrieben. Es zeigt die einzige Figur einen schematischen Längsschnitt durch eine bevorzugte Ausführungsform eines oberen Teils einer Betriebsbremspedaleinrichtung, welche eine bevorzugte Ausführungsform einer Positionserkennungsvorrichtung aufweist.

### Beschreibung des Ausführungsbeispiels

Der in der Figur gezeigte obere Teil einer elektro-pneumatischen Betriebsbremspedaleinrichtung 1 oder eines elektro-pneumatischen Betriebsbremsventils bzw. Fußbremsmoduls als bevorzugtes Ausführungsbeispiel der Erfindung ist Bestandteil einer elektro-pneumatischen Bremseinrichtung eines Nutzfahrzeugs. Die elektro-pneumatische Betriebsbremseinrichtung weist beispielsweise einen elektrischen Bremskreis und zwei pneumatische Betriebsbremskreise auf.

Die Betriebsbremspedaleinrichtung 1 beinhaltet unter anderem einen von einem nicht dargestellten Betriebsbremspedal betätigten Stößel 2, welcher in eine Stößelaufnahme 3 eines in einem Gehäuse 4 axial beweglichen Stößelkolbens 6 eingreift. Der Stößelkolben 6 weist ein Kolbenhemd 8 auf, an welchem eine Schraubendruckfederanordnung 9, die beispielsweise aus zwei parallel und koaxial angeordneten Schraubenfedern besteht, einer ersten, beispielsweise äußeren Schraubenfeder 5 und einer zweiten, beispielsweise inneren Schraubenfeder 7, einendseitig abgestützt ist, welche anderendseitig über einen zwischengeordneten Federteller 16 an einem Ventilkolben 10 abgestützt ist. Der Stößelkolben 6 besteht beispielsweise aus paramagnetischem Material, insbesondere aus Aluminium. Die innere oder zweite Schraubenfeder 7 ist ebenfalls aus einem paramagnetischen Material gefertigt.

In ein Innengewinde einer von der Stößelaufnahme 3 wegweisenden Sacklochbohrung 18 des Stößelkolbens 6 mit einem Außengewinde ihres Stellschraubenschaftes 20 eingeschraubt und zentral und koaxial in Bezug zur Schraubendruckfederanordnung 9 angeordnet ist eine Stellschraube 11 mit ihrem Stellschraubenkopf 24 in einer zum Stößelkolben 6 weisenden Bohrung 26 des Ventilkolbens 10 axial beweglich geführt. Die Führung des Stellschraubenkopfes 24 in der Bohrung 26 des Ventilkolbens 10 besteht beispielsweise in einer axialen Gleitlagerung. Diese Bohrung 26 ist insbesondere eine Durchgangsbohrung im Ventilkolben 10.

Die Stellschraube ragt mit ihrem Stellschraubenschaft 20 durch eine zentrale Durchgangsbohrung 27 des Federtellers 16 hindurch, wobei der Stellschraubenkopf 24 an dem Bohrungsrand der Durchgangsbohrung 27 zur Anlage kommt und dadurch dort gekontert ist, weil sein Außendurchmesser größer ist als der Innendurchmesser der Durchgangsbohrung 27.

Der Federteller 16 ist dann zwischen dem Ventilkolben 10 und der Schraubenfederanordnung 9 geklemmt. Weiterhin kann zwischen dem Federteller 16 und dem Ventilkolben 10 ein auswechselbares Distanzelement 29 angeordnet sein. Die aus dem Innengewinde der Sacklochbohrung 18 und dem Außengewinde der Stellschraube 11 gebildete Gewindeverbindung ist bevorzugt ein selbsthemmendes Gewinde. Weiterhin bestehen die Schraubenfedern 5, 7 der Schraubenfederanordnung 9 vorzugsweise aus paramagnetischem Material.

Der Ventilkolben 10 ist über eine dritte, in der Figur nur teilweise sichtbare Schraubenfeder 28 an dem Gehäuse 4 abgestützt. Weiterhin begrenzt der Ventilkolben 10 mit seiner von der Schraubenfederanordnung 9 wegweisenden Kolbenfläche eine Arbeitskammer 30, welche über einen Arbeitsanschluss des Gehäuses 4 mit einer zu pneumatischen Radbremszylindern führenden Bremsdruckleitung verbunden ist.

Der Ventilkolben 10 betätigt in bekannter Weise ein hier aus Maßstabsgründen nicht mehr dargestelltes Doppelsitzventil, um den Arbeitsanschluss bzw. die Arbeitskammer entweder mit einer Entlüftung (Fahrstellung) oder mit einem Vorratsanschluss (Bremsstellung) zu verbinden, an welchen eine zu einem Druckluftvorrat führende Vorratsdruckleitung angeschlossen ist. Der Arbeitsanschluss steht über eine pneumatische Druckleitung des pneumatischen Betriebsbremskreises mit einem pneumatischen Anschluss eines Druckregelmoduls in Verbindung, welche den pneumatischen Betriebsbremskreis über ein integriertes Backup-Magnetventil an pneumatische Betriebsbremszylinder weiter schleift. Die Arbeitskammer ist daher je nach Betätigungszustand des Doppelsitzventils entweder mit einer Entlüftung oder mit einem Druckluftvorrat verbunden.

Ferner ist eine berührungslose und nach induktivem Prinzip funktionierende Positionserkennungsvorrichtung 100 vorgesehen. Die Positionserkennungsvorrichtung 100 umfasst das Gehäuse 4, welches hier ein gemeinsames Gehäuse mit der Betriebsbremspedaleinrichtung1 darstellt, den Stößelkolben 6 als Positionsgeber, eine Mess- und Auswerteeinrichtung 34, den relativ zum Gehäuse 4 bewegbaren Stößel 2, durch welchen eine hier axiale Position des Stößelkolbens 6 veränderbar ist sowie die Schraubenfederanordnung mit der ersten Schraubenfeder 5 und der zweiten Schraubenfeder 7.

Die erste Schraubenfeder 5 und die zweite Schraubenfeder 7 sind an eine in einem an das Gehäuse 4 an einem Umfangsabschnitt angeflanschten Elektronikgehäuse 32 angeordneten elektronischen Mess- und Auswerteeinrichtung 14 elektrisch leitend verbunden. Die Komponenten der Mess- und Auswerteeinrichtung 14 sind auf einer Platine 34 angeordnet, welche im eingebauten Zustand des Elektronikgehäuses 32 beispielsweise parallel zu einer Mittelachse 36 der Betriebsbremspedaleinrichtung 1 ist. Die erste Schraubenfeder 5 und die zweite Schraubenfeder 7 umschließen insbesondere das Kolbenhemd 8 des Stößelkolbens 6 ringförmig, so dass sich das Kolbenhemd 8 des Stößelkolbens 6 innerhalb der ersten Schraubenfeder 5 und der zweiten Schraubenfeder 7 axial bewegen kann, wenn sich der Stößelkolben 6 infolge einer Bewegung des Stößels 2 axial bewegt, d.h. seine axiale Position verändert. Die Mess- und Auswerteeinrichtung 14 ist so ausgebildet, dass sie die erste Schraubenfeder 5 und die zweite Schraubenfeder 7 bestromt, wobei sie infolge der Bestromung ein Magnetfeld mit einem Magnetfeldbereich erzeugen, welches den Stößelkolben 6, insbesondere das Kolbenhemd 8 des Stößelkolbens 6 erfasst. Dabei verursacht eine Änderung der axialen Position des Stößelkolbens 6 eine Induktivitätsänderung der ersten Schraubenfeder 5 und der zweiten Schraubenfeder 7, welche von der Messund Auswerteeinrichtung 14 erfasst wird und auf deren Basis dann die Position oder die Positionsänderung des Stößelkolbens 6 berührungslos ermittelt wird.

Weiterhin ist, ein Gehäusedeckel 22 am Kopf des Gehäuses 4 befestigt. Ein oberer Anschlag für den Stößelkolben 6 kann durch einen Führungskörper 38 gebildet werden, der in dem Gehäuse 4 kopfseitig gehalten und in dessen zentraler Bohrung der Stößelkolben 6 dichtend geführt ist.

Dabei sind das Gehäuse 4, der Stößel 2, der Stößelkolben 6, der Federteller 16, die Schraubenfederanordnung 9, der Ventilkolben 10, die Stellschraube 11, der Führungskörper 38 und der Gehäusedeckel 22 im Wesentlichen, d.h. gegebenenfalls mit konstruktiv bedingt lokal abweichenden Ausformungen wie etwa durch das Elektronikgehäuse 32 bedingt, koaxial mit der Mittelachse 36 angeordnet.

Eine obere Endposition des Stößelkolbens 6, in welcher dieser an den Führungskörper 38 anschlägt, markiert dann den Fahrzustand mit gelöster Betriebsbremse, bei welchem der Stößel 2 vom Betriebsbremsplatte unbelastet und der Ventilkolben 10 von einem im Gehäuse 4 axial geführten Ventilkörper des Doppelsitzventils abgehoben ist und dadurch Druckluft vom Arbeitsanschluss über die Arbeitskammer in die Entlüftung strömen kann, was eine Entlüftung des pneumatischen Betriebsbremskreises nach sich zieht. Die Mess- und Auswerteeinrichtung 14 erzeugt dabei ein entsprechendes elektrisches (Null-) Betriebsbremsanforderungssignal.

Wenn der Fahrer dann ausgehend vom Fahrzustand mit dem Fuß die Betriebsbremsplatte betätigt, bewegt sich dadurch der Stößel 2 und damit auch der Stößelkolben 6 axial nach unten. Diese Bewegung wird bis zu einem Anfangshub ausschließlich durch die erste Schraubenfeder 5 auf den Ventilkolben 10 übertragen. Wenn dann der Anfangshub überwunden ist, kommt der Stößelkolben 6 an der zweiten Schraubenfeder 7 zur Anlage, wodurch nun auch die zweite Schraubenfeder 7 die Betätigungskraft auf den Ventilkolben 10 überträgt. Wie oben ausgeführt, bewegt sich dabei der Stößelkolben 6 infolge der Bewegung des Stößels 2 axial entsprechend, d.h. seine axiale Position verändert sich. Die erste Schraubenfeder 5 und die zweite Schraubenfeder 7 verändern dann, wenn das Kolbenhemd 8 des Stößelkolbens 6 aufgrund einer Betätigung der Betriebsbremsplatte in axialer Richtung tiefer in die erste Schraubenfeder 5 und die zweite Schraubenfeder 7 eintaucht, ihre Induktivität L, was durch die Mess- und Auswerteeinrichtung 14 in bekannter Weise detektierbar ist, welche dann mittels einer auf der Platine 34 integrierten Schaltung aus der veränderten Induktivität L der ersten Schraubenfeder 5 und der zweiten Schraubenfeder 7 ein der axialen Bewegung des Stößelkolbens 6 proportionales elektrisches Betriebsbremsanforderungssignal bildet. Da der Stößelkolben 6 insbesondere aus paramagnetischem Material besteht, schwächt er das von der ersten Schraubenfeder 5 und der zweiten Schraubenfeder 7 erzeugte Magnetfeld, wenn er in dieses eintaucht.

Da der Ventilkolben 10 über die dritte Schraubenfeder 28 an dem Gehäuse 4 abgestützt ist, werden die beiden Schraubenfedern 5, 7 der Schraubenfederanordnung 9 um einen Kompressionsweg komprimiert, so dass der Stellschraubenkopf 24 der Stellschraube 11 zum Ausgleich um diesen Kompressionsweg in die Bohrung 26 des Ventilkolbens 10 eintaucht, wie anhand der Figur leicht vorstellbar ist.

Die Mess- und Auswerteeinrichtung 14 ist über eine digitale Schnittstelle (A/D-Wandler) an eine hier nicht gezeigte Kommunikationsleitung, beispielsweise an einen Datenbus angeschlossen, an dem auch ein zentrales elektronisches Bremssteuergerät der elektro-pneumatischen Betriebsbremseinrichtung angeschlossen ist, so dass das elektrische Betriebsbremsanforderungssignal innerhalb des elektrischen Betriebsbremskreises in dieses elektronische Bremssteuergerät eingesteuert wird. In dem Bremssteuergerät kann das Betriebsbremsanforderungssignal dann achsweise oder radweise durch höhere Funktionen wie beispielsweise eine automatische achslastabhängige Bremsdruckregelung, eine Differenzschlupfregelung etc. verändert werden, bevor es in den die Druckregelmodule der Vorderachse bzw. der Hinterachse eingesteuert wird. In den Druckregelmodulen sind lokale Steuergeräte installiert, die dann mittels einer Einlass-/Auslass-Magnetventilkombination, die ein Relaisventil vorsteuert, um einen von dem Betriebsbremsanforderungssignal abhängigen Bremsdruck in den zugeordneten pneumatischen Betriebsbremszylinder(n) zu erzeugen. Mittels eines jeweils in ein solches Druckregelmodul integrierten Drucksensors findet dann eine Regelung des ausgesteuerten Ist-Bremsdrucks durch Angleichung an einen durch das Betriebsbremsanforderungssignal repräsentierten Soll-Bremsdruck statt.

Um die Vorspannung der Schraubenfederanordnung 9 einzustellen, wird dann einfach die Stellschraube 11 in dem Innengewinde des Stößelkolbens 6 verdreht. Hierzu weist der Stellschraubenkopf 24 eine Ansatzfläche für ein Werkzeug, insbesondere für einen Inbusschlüssel auf, wobei das Werkzeug über das andere Ende der Durchgangsbohrung 26 auch in montiertem Zustand eingeführt werden kann.

Die Erfindung ist nicht auf das oben beschriebene Ausführungsbeispiel beschränkt. Die Positionserkennungsvorrichtung 100 kann auch beispielsweise von einer Betriebsbremspedaleinrichtung 1 einer rein elektrischen Bremseinrichtung umfasst sein, welche lediglich über wenigstens einen elektrischen Kanal verfügt. Anstatt an dem Ventilkolben 10 ist dann die Schraubenfederanordnung 9 an einem Boden des Gehäuses 4 abgestützt, welcher dann die Bohrung 26 für die Führung des Stellschraubenkopfes 24 aufweist.

Ebenso kann die Positionserkennungsvorrichtung 100 auch von einem Getriebe eines Fahrzeugs umfasst sein, welches wenigstens eine Schaltstange oder eine Betätigungsstange aufweist, welche durch eine Getriebe-Schraubenfederanordnung vorgespannt ist, wobei die Positionserkennungsvorrichtung zur Erkennung der Position der Schaltstange oder der Betätigungsstange ausgebildet ist. Dann ist die Getriebe-Schraubenfederanordnung von der Positionserkennungsvorrichtungs-Schraubenfederanordnung umfasst oder bildet die Positionserkennungsvorrichtungs-Schraubenfederanordnung, um die oben beschriebenen Effekte zu erzielen.

### Bezugszeichenliste

- 1: Betriebsbremspedaleinrichtung
- 2: Stößel
- 3: Stößelaufnahme
- 4: Gehäuse
- 5: erste Schraubenfeder
- 6: Stößelkolben
- 7: zweite Schraubenfeder
- 8: Kolbenhemd
- 9: Schraubenfederanordnung
- 10: Ventilkolben
- 11: Stellschraube
- 14: Mess- und Auswerteeinrichtung
- 16: Federteller
- 18: Sacklochbohrung
- 20: Stellschraubenschaft
- 22: Gehäusedeckel
- 24: Stellschraubenkopf
- 26: Bohrung
- 27: Durchgangsbohrung
- 28: dritte Schraubenfeder
- 29: Distanzelement
- 30: Arbeitskammer
- 32: Elektronikgehäuse
- 34: Platine
- 36: Mittelachse
- 38: Führungskörper
- 100: Positionserkennungsvorrichtung

## Patentansprüche

1. Bremseinrichtung für ein Fahrzeug, wobei die Bremseinrichtung eine induktive Positionserkennungsvorrichtung (100) aufweist, wobei die Bremseinrichtung als elektro-pneumatische oder elektrische Bremseinrichtung ausgebildet ist und eine Betriebsbremspedaleinrichtung (1) aufweist, welche wenigstens Folgendes umfasst:
a) ein Betriebsbremspedal,
b) einen mit dem Betriebsbremspedal verbundenen Stößel (2),
c) ein Betriebsbremspedaleinrichtungs-Gehäuse (4),
d) ein in dem Betriebsbremspedaleinrichtungs-Gehäuse (4) axial beweglich gelagerten Stößelkolben (6) mit einer Stößelaufnahme (3), in welche der Stößel (2) eingreift,
e) eine Betriebsbremspedaleinrichtungs-Schraubenfederanordnung, welche den Stößelkolben (6) an einem ein Sitzventil betätigenden Ventilkolben (10) oder an einem Gehäuseabschnitt des Betriebsbremspedaleinrichtungs-Gehäuses axial abstützt, wobei
f) die induktive Positionserkennungsvorrichtung (100) zur berührungslosen Erkennung einer Position eines Positionsgebers ausgebildet ist und wenigstens Folgendes umfasst:
f1) Ein Positionserkennungsvorrichtungs-Gehäuse (4),
f2) eine Spule, welche ein Magnetfeld in einem Magnetfeldbereich erzeugt,
f3) eine mit der Spule funktional gekoppelte Mess- und Auswerteeinrichtung (34),
f4) den Positionsgeber,
f5) eine relativ zum Positionserkennungsvorrichtungs-Gehäuse (4) bewegbare Stelleinrichtung (2), durch welche eine Position des Positionsgebers veränderbar ist, wobei der Positionsgeber derart in dem Magnetfeldbereich angeordnet und ausgebildet ist, dass eine Änderung der Position des Positionsgebers in Bezug auf das Magnetfeld eine Induktivitätsänderung der Spule verursacht,
f6) eine Positionserkennungsvorrichtungs-Schraubenfederanordnung (9) mit wenigstens einer Schraubenfeder (5, 7), welche Federkräfte auf den Positionsgeber ausübt, wobei
f7) die Mess- und Auswerteeinrichtung (34) eine Funktion aufweist, mit der die Induktivitätsänderung der Spule erfasst und daraus die Position des Positionsgebers (6) ermittelt wird, wobei
g) der Stößel (2) eine Betätigungsstange bildet und von der Stelleinrichtung der Positionserkennungsvorrichtung (100) umfasst ist oder die Stelleinrichtung der Positionserkennungsvorrichtung (100) bildet, und wobei
h) der Stößelkolben (6) von dem Positionsgeber der Positionserkennungsvorrichtung (100) umfasst ist oder den Positionsgeber der Positionserkennungsvorrichtung (100) bildet, und wobei
i) die Betriebsbremspedaleinrichtungs-Schraubenfederanordnung von der Positionserkennungsvorrichtungs-Schraubenfederanordnung (9) umfasst oder die Positionserkennungsvorrichtungs-Schraubenfederanordnung (9) bildet, und wobei
j) das Betriebsbremspedaleinrichtungs-Gehäuse von dem Positionserkennungsvorrichtung-Gehäuse (4) umfasst ist oder das Positionserkennungsvorrichtung-Gehäuse (4) bildet, **dadurch gekennzeichnet, dass**
k) die wenigstens eine Schraubenfeder (5, 7) ausgebildet und angeordnet ist, dass sie wenigstens teilweise die Spule ausbildet, und dass I) die wenigstens eine Schraubenfeder (5, 7) mit der Mess- und Auswerteeinrichtung (34) elektrisch leitend verbunden ist.

2. Bremseinrichtung nach Anspruch 1, **dadurch gekennzeichnet, dass** der Positionsgeber aus einem elektrisch leitfähigen Material gebildet ist.

3. Bremseinrichtung nach Anspruch 1 oder 2, **dadurch gekennzeichnet, dass** der Positionsgeber aus einem nicht-magnetischen Material gebildet ist.

4. Bremseinrichtung nach einem der Ansprüche 1 bis 3, **dadurch gekennzeichnet, dass** der Positionsgeber aus Aluminium und/oder Kupfer gebildet ist.

5. Bremseinrichtung nach einem der vorhergehenden Ansprüche, **dadurch gekennzeichnet, dass** die Funktion der Mess- und Auswerteeinrichtung (10) derart gestaltet ist, dass diese einen vom Positionsgeber (6) zurückgelegten Weg (s) ermitteln kann.

6. Bremseinrichtung nach einem der vorhergehenden Ansprüche, **dadurch gekennzeichnet, dass** der Positionsgeber kraft-, stoff- und/oder formschlüssig an der Betätigungsstange fixiert ist und/oder die Betätigungsstange derart kontaktiert, dass die Position des Positionsgebers veränderbar ist.

7. Bremseinrichtung nach einem der vorhergehenden Ansprüche, **dadurch gekennzeichnet, dass** die Betriebsbremspedaleinrichtungs-Schraubenfederanordnung (9) in axialer Richtung gesehen wenigstens einen axialen Abschnitt des Stößelkolbens (6) umschlingt.

8. Bremseinrichtung nach einem der vorhergehenden Ansprüche, **dadurch gekennzeichnet, dass** sich die Betriebsbremspedaleinrichtungs-Schraubenfederanordnung (9) einerseits an dem Stößelkolben (6) und andererseits an wenigstens einem Federteller (16) abstützt, welcher in Bezug auf den Ventilkolben (10), den Stößelkolben (6) oder den Gehäuseabschnitt axialkraftübertragend angeordnet ist.

9. Bremseinrichtung nach einem der vorhergehenden Ansprüche, **dadurch gekennzeichnet, dass** zumindest der Federteller (16), der Stößelkolben (6), der Ventilkolben (10) und die Betriebsbremspedaleinrichtungs-Schraubenfederanordnung (9) koaxial angeordnet sind.

10. Bremseinrichtung nach einem der vorhergehenden Ansprüche, **dadurch gekennzeichnet, dass** die Betriebsbremspedaleinrichtungs-Schraubenfederanordnung (9) mehrere parallel angeordnete Schraubenfedern (5, 7) aufweist.

11. Bremseinrichtung nach Anspruch 10, **dadurch gekennzeichnet, dass** eine erste Schraubenfeder (5) zwischen dem Stößelkolben (6) und dem Federteller (16) stets vorgespannt, aber eine zweite Schraubenfeder (7) mit ihrem einen Ende an dem Federteller (16) abgestützt ist und mit ihrem anderen Ende erst nach Zurücklegen eines bestimmten Anlegehubs des Stößelkolbens (6) an dem Stößelkolben (6) zur Anlage kommt.

12. Fahrzeug umfassend eine Bremseinrichtung nach einem der vorhergehenden Ansprüche.

## Claims

1. Braking apparatus for a vehicle, wherein the braking apparatus has an inductive position detection device (100), wherein the braking apparatus is designed as an electropneumatic or electric braking apparatus, and has a service brake pedal apparatus (1), which comprises at least the following:
a) a service brake pedal,
b) a tappet (2) connected to the service brake pedal,
c) a service brake pedal apparatus housing (4),
d) a tappet piston (6) mounted in an axially displaceable manner in the service brake pedal apparatus housing (4) with a tappet holder (3), in which the tappet (2) engages,
e) a service brake pedal apparatus coil spring arrangement, which axially supports the tappet piston (6) on a valve piston (10) operating a seat valve or on a housing section of the service brake pedal apparatus housing, wherein
f) the inductive position detection device (100) is designed for contactless detection of a position of a position sensor and comprises at least the following:
f1) a position detection device housing (4),
f2) a coil, which generates a magnetic field in a magnetic field region,
f3) a measurement and evaluation apparatus (34) functionally coupled to the coil,
f4) the position sensor,
f5) an actuating apparatus (2) that can be moved relative to the position detection device housing (4), by means of which a position of the position sensor can be changed, wherein the position sensor is arranged in the magnetic field region and is designed such that a change in the position of the position sensor in relation to the magnetic field causes a change in inductance of the coil,
f6) a position detection device coil spring arrangement (9) with at least one coil spring (5, 7), which exerts spring forces on the position sensor, wherein
f7) the measurement and evaluation apparatus (34) has a function, with which the change in inductance of the coil is detected and the position of the position sensor (6) is determined therefrom, wherein
g) the tappet (2) forms an actuator rod and is comprised of the actuating apparatus of the position detection device (100) or forms the actuating apparatus of the position detection device (100), and wherein
h) the tappet piston (6) is comprised of the position sensor of the position detection device (100) or forms the position sensor of the position detection device (100), and wherein
i) the service brake pedal apparatus coil spring arrangement is comprised of the position detection device coil spring arrangement (9) or forms the position detection device coil spring arrangement (9), and wherein
j) the service brake pedal apparatus housing is comprised of the position detection device housing (4) or forms the position detection device housing (4), **characterized in that**
k) the at least one coil spring (5, 7) is designed and arranged such that it at least partially forms the coil, and **in that**
l) the at least one coil spring (5, 7) is electrically conductively connected to the measurement and evaluation apparatus (34).

2. Braking apparatus according to claim 1, **characterized in that** the position sensor is made from an electrically conductive material.

3. Braking apparatus according to claim 1 or 2, **characterized in that** the position sensor is made from a non-magnetic material.

4. Braking apparatus according to any one of claims 1 to 3, **characterized in that** the position sensor is made from aluminum and/or copper.

5. Braking apparatus according to any one of the preceding claims, **characterized in that** the function of the measurement and evaluation apparatus (10) is designed such that it can determine a path (s) traveled by the position sensor (6).

6. Braking apparatus according to any one of the preceding claims, **characterized in that** the position sensor is fixed in a force-fitting, material-fitting and/or form-fitting manner to the actuator rod and/or contacts the actuator rod such that the position of the position sensor can be changed.

7. Braking apparatus according to any one of the preceding claims, **characterized in that**, when viewed in an axial direction, the service brake pedal apparatus coil spring arrangement (9) loops around at least one axial section of the tappet piston (6).

8. Braking apparatus according to any one of the preceding claims, **characterized in that** the service brake pedal apparatus coil spring arrangement (9) is supported, on the one hand, on the tappet piston (6) and, on the other hand, on at least one spring plate (16), which is arranged so as transmit axial force in relation to the valve piston (10), the tappet piston (6) or the housing section.

9. Braking apparatus according to any one of the preceding claims, **characterized in that** at least the spring plate (16), the tappet piston (6), the valve piston (10) and the service brake pedal apparatus coil spring arrangement (9) are arranged coaxially.

10. Braking apparatus according to any one of the preceding claims, **characterized in that** the service brake pedal apparatus coil spring arrangement (9) has multiple coil springs (5, 7) arranged in parallel.

11. Braking apparatus according to claim 10, **characterized in that** a first coil spring (5) is constantly pretensioned between the tappet piston (6) and the spring plate (16), but a second coil spring (7) is supported with its one end on the spring plate (16) and with its other end only coming to rest on the tappet piston (6) after a certain application stroke of the tappet piston (6) has been traveled.

12. Vehicle comprising a braking apparatus according to any one of the preceding claims.

## Revendications

1. Dispositif de freinage pour un véhicule, dans lequel le dispositif de freinage présente un dispositif de détection de position (100) inductif, dans lequel le dispositif de freinage est formé comme dispositif de freinage électropneumatique ou électrique et présente un dispositif de pédale de frein de service (1) qui comprend au moins ce qui suit :
a) une pédale de frein de service,
b) un coulisseau (2) relié à la pédale de frein de service,
c) un boîtier de dispositif de pédale de frein de service (4),
d) un piston de coulisseau (6) logé de manière mobile axialement dans le boîtier de dispositif de pédale de frein de service (4) avec un logement de coulisseau (3), dans lequel le coulisseau (2) s'engage,
e) un ensemble de ressort cylindrique de dispositif de pédale de frein de service qui appuie axialement le piston de coulisseau (6) contre un piston de soupape (10) actionnant une soupape à siège ou contre une section du boîtier de dispositif de pédale de frein de service, dans lequel
f) le dispositif de détection de position (100) inductif est formé pour la détection sans contact d'une position d'un capteur de position et comprend au moins ce qui suit :
f1) un boîtier de dispositif de détection de position (4),
f2) une bobine qui génère un champ magnétique dans une zone de champ magnétique,
f3) un dispositif de mesure et d'évaluation (34) couplé de manière fonctionnelle à la bobine,
f4) le capteur de position,
f5) un dispositif de réglage (2) mobile par rapport au boîtier de dispositif de détection de position (4), par lequel une position du capteur de position peut être modifiée, dans lequel le capteur de position est agencé et formé dans la zone de champ magnétique de telle manière qu'une modification de la position du capteur de position par rapport au champ magnétique cause une modification d'inductance de la bobine,
f6) un ensemble de ressort cylindrique de dispositif de détection de position (9) avec au moins un ressort cylindrique (5, 7) qui exerce des forces de ressort sur le capteur de position, dans lequel
f7) le dispositif de mesure et d'évaluation (34) présente une fonction, avec laquelle la modification d'inductance de la bobine est détectée et à partir de celle-ci, la position du capteur de position (6) est déterminée, dans lequel
g) le coulisseau (2) forme une tige d'actionnement et est compris par le dispositif de réglage du dispositif de détection de position (100) ou forme le dispositif de réglage du dispositif de détection de position (100), et dans lequel
h) le piston de coulisseau (6) est compris par le capteur de position du dispositif de détection de position (100) ou forme le capteur de position du dispositif de détection de position (100) et dans lequel
i) l'ensemble de ressort cylindrique de dispositif de pédale de frein de service est compris par l'ensemble de ressort cylindrique de dispositif de détection de position (9) ou forme l'ensemble de ressort cylindrique de dispositif de détection de position (9), et dans lequel
j) le boîtier de dispositif de pédale de frein de service est compris par le boîtier de dispositif de détection de position (4) ou forme le boîtier de dispositif de détection de position (4), **caractérisé en ce que**
k) le au moins un ressort cylindrique (5, 7) est formé et agencé afin qu'il forme au moins partiellement la bobine et **en ce que**
l) le au moins un ressort cylindrique (5, 7) est relié de manière électroconductrice au dispositif de mesure et d'évaluation (34).

2. Dispositif de freinage selon la revendication 1, **caractérisé en ce que** le capteur de position est formé en un matériau électroconducteur.

3. Dispositif de freinage selon la revendication 1 ou 2, **caractérisé en ce que** le capteur de position est formé en un matériau non-magnétique.

4. Dispositif de freinage selon l'une quelconque des revendications 1 à 3, **caractérisé en ce que** le capteur de position est formé en aluminium et/ou en cuivre.

5. Dispositif de freinage selon l'une quelconque des revendications précédentes, **caractérisé en ce que** la fonction du dispositif de mesure et d'évaluation (10) est conçue de telle manière que celle-ci puisse déterminer une course (s) parcourue par le capteur de position (6).

6. Dispositif de freinage selon l'une quelconque des revendications précédentes, **caractérisé en ce que** le capteur de position est fixé à force, par matière et/ou par complémentarité de formes à la tige d'actionnement et/ou touche la tige d'actionnement de telle manière que la position du capteur de position soit modifiable.

7. Dispositif de freinage selon l'une quelconque des revendications précédentes, **caractérisé en ce que** l'ensemble de ressort cylindrique de dispositif de pédale de frein de service (9) entoure vu dans le sens axial au moins une section axiale du piston de coulisseau (6).

8. Dispositif de freinage selon l'une quelconque des revendications précédentes, **caractérisé en ce que** l'ensemble de ressort cylindrique de dispositif de pédale de frein de service (9) appuie d'un côté contre le piston de coulisseau (6) et de l'autre côté contre au moins une coupelle de ressort (16) qui est agencée de manière à transmettre la force axialement par rapport au piston de soupape (10), au piston de coulisseau (6) ou à la section de boîtier.

9. Dispositif de freinage selon l'une quelconque des revendications précédentes, **caractérisé en ce qu'**au moins la coupelle de ressort (16), le piston de coulisseau (6), le piston de soupape (10) et l'ensemble de ressort cylindrique de dispositif de pédale de frein de service (9) sont agencés de manière coaxiale.

10. Dispositif de freinage selon l'une quelconque des revendications précédentes, **caractérisé en ce que** l'ensemble de ressort cylindrique de dispositif de pédale de frein de service (9) présente plusieurs ressorts cylindriques (5, 7) agencés parallèlement.

11. Dispositif de freinage selon la revendication 10, **caractérisé en ce qu'**un premier ressort cylindrique (5) est toujours précontraint entre le piston de coulisseau (6) et la coupelle de ressort (16), mais un second ressort cylindrique (7) est en appui avec une extrémité contre la coupelle de ressort (16) et vient en appui avec son autre extrémité seulement après le parcours d'une course de pose déterminée du piston de coulisseau (6) contre le piston de coulisseau (6).

12. Véhicule comprenant un dispositif de freinage selon l'une quelconque des revendications précédentes.
